# EUROPEAN PATENT APPLICATION

(11) **EP 4 394 430 A1**
(43) Date of publication of application: **03.07.2024**
(21) Application number: 23213047.6
(22) Date of filing: 29.11.2023
(51) Int. Cl.: G01S 7/00, G01S 13/00, G01S 13/58, G01S 7/02

(54) **JOINT COMMUNICATION AND SENSING SYSTEM AND SIGNALLING FOR USER EQUIPMENT SENSING**

(30) Priority: 30.12.2022 US 202218148486
(71) Applicant: NXP B.V., 5656 AG Eindhoven (NL)
(72) Inventor: Pandharipande, Ashish, 5656AG Eindhoven (NL); van Houtum, Wilhemus Johannes, 5656AG Eindhoven (NL); Mattheijssen, Paul, 5656AG Eindhoven (NL); van den Broeke, Leendert Albertus Dick, 5656AG Eindhoven (NL)
(74) Representative: Schmütz, Christian Klaus Johannes

(57) **Abstract**

A radar system includes a receiver, a processor, and a non-transitory computer-readable medium storing machine instructions. The machine instructions, when executed by the processor, cause the processor to receive, within a communication frame, radar metadata including information indicative of sensing time slots within the communication frame. During the sensing time slots, the processor causes the receiver to obtain a set of radar reflections off of an object in an environment and determines, based on the set of received radar reflections and the radar metadata, at least one of a distance between the object and the radar system, a velocity of the object, and an angle of arrival for the object. In some implementations, the radar system is a first radar system, and the set of radar reflections are radar signals transmitted by a second radar system and reflected off of the object in the environment.

## Description

### BACKGROUND

Joint communication and sensing systems share a single hardware platform and balance available resources spent on communication signals and signal processing and radar signals and signal processing. Base stations may perform radar sensing to obtain information about the surrounding environment and communicate the information about the environment to nearby user devices. However, the user devices are idle while the base stations perform radar sensing.

### BRIEF DESCRIPTION OF THE DRAWINGS

The present invention may be better understood, and its numerous objects, features, and advantages made apparent to those skilled in the art by referencing the accompanying drawings.
FIG. 1A shows, in block diagram form, an example radar transceiver system, according to one embodiment.
FIG. 1B shows, in block diagram form, an example radar receiver system, according to one embodiment.
FIG. 2 shows a diagram of transmitted and received signals from an example base station and user device in a passive sensing mode of operation, according to one embodiment.
FIG. 3 shows a diagram of transmitted and received signals from an example base station and user device in an active sensing mode of operation, according to one embodiment.
FIG. 4 shows a diagram of transmitted and received signals from an example base station and user device in a hybrid active and passive sensing mode of operation, according to one embodiment.
FIG. 5 shows diagrams of signal frames for the base station and user device shown in FIG. 2, according to some embodiments.
FIG. 6 shows, in flow chart form, an example process for operating a radar receiver system in a passive sensing mode of operation, according to one embodiment.
FIG. 7 shows, in flow chart form, an example process for operating a radar transceiver system in an active sensing mode of operation, according to one embodiment.
FIG. 8 shows, in flow chart form, another example process for operating a radar transceiver system in an active sensing mode of operation, according to one embodiment.

The use of the same reference symbols in different drawings indicates identical items unless otherwise noted. The Figures are not necessarily drawn to scale.

### DETAILED DESCRIPTION

As discussed previously herein, base stations can perform radar sensing to obtain information about the surrounding environment but nearby user devices are idle while the base stations perform radar sensing. The techniques and methods described herein enable user devices to perform passive, active, or hybrid radar sensing while the base stations perform radar sensing. Before the first sensing time slot in a communication frame, the base station transmits radar metadata, such as which time slots in the communication frame are dedicated to radar sensing and a frequency band, waveform sequence, and beamforming indices for the radar sensing signals generated by the base station. The user device can turn on a radar receiver during the sensing time slots and receive reflections of the radar signals transmitted by the base station off objects in the environment. Based on the received reflections and the radar metadata, the user device can perform passive sensing to determine the distance, velocity, and angle of arrival between the objects in the environment and the user device.

In addition to or instead of performing passive sensing based on the received reflections from the base station radar sensing and the radar metadata, the user device can perform active sensing by generating and transmitting radar sensing signals having characteristics chosen to reduce interference with radar sensing signals from the base station. For example, the user device can generate radar sensing signals in a different frequency band than the frequency band indicated by the radar metadata, or in a same frequency band but different signal strength than the radar sensing signals from the base station. The user device can then share the determined distance, velocity, and angle of arrival between the objects in the environment and the user device with the base station or other nearby user devices.

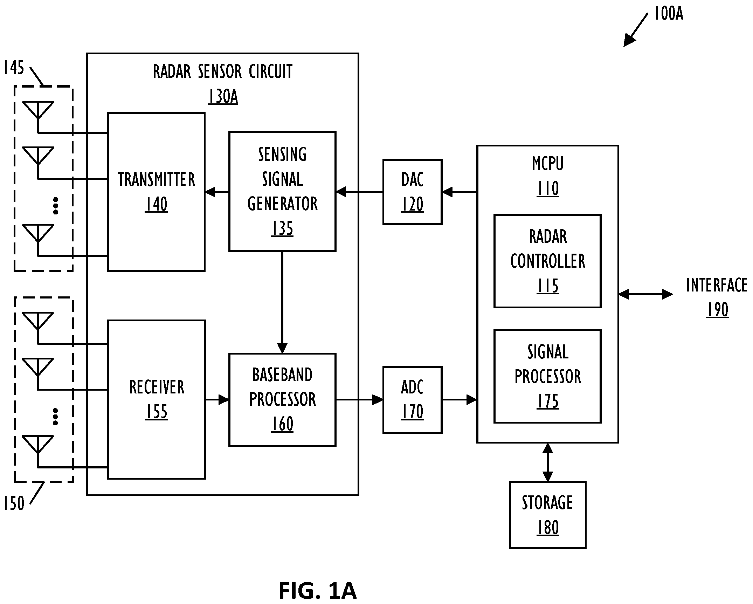

FIG. 1A shows, in block diagram form, an example radar transceiver system 100A, according to an embodiment. Radar system 100A can be included in a user device, for example a vehicle's driver assistance system, or in a communication base station. The example radar system 100A is a frequency-modulated continuous wave (FMCW) radar system, also referred to as a continuous-wave frequency-modulated (CWFM) radar, and capable of determining the distance or range, velocity, and angle of arrival of an object in the field of view of radar system 100A. Although radar system 100A is described herein as a linear chirp radar system, any appropriate radar system that generates at least one of range, Doppler, and angle of arrival information can be used, such as orthogonal frequency-domain multiplexing, polyphase sequencing, binary sequencing, Zadoff-Chu sequencing, and the like.

In this example, radar system 100A includes a microcontroller and processor unit (MCPU) 110, a digital-to-analog converter (DAC) 120, a radar sensor circuit 130A, a first antenna array 145, a second antenna array 150, an analog-to-digital converter (ADC) 170, and storage 180. The radar sensor circuit 130A is a radar transceiver circuit in this example, and includes both transmitter and receiver signal chains. The MCPU 110 comprises one or more MCPU cores, general purpose processing cores, field-programmable gate arrays, digital signal processors, application-specific integrated circuits, and the like, or any combination thereof. The term "MCPU" in the singular is used herein to refer to either a single or multiple of the MCPU cores, general purpose processing cores, field-programmable gate arrays, digital signal processors, application-specific integrated circuits, and the like, or any combination thereof comprised in the MCPU 110.

MCPU 110 includes a radar controller 115 and a signal processor 175. The radar controller 115 can receive data from the radar sensor circuit 130A and control radar parameters of the radar sensor circuit 130A such as frequency band, length of a radar frame, and the like via the DAC 120. A control signal from DAC 120 can be used to adjust the radar sensing signals output from a sensing signal generator 135 included in the radar sensor circuit 130A. The signal processor 175 in MCPU 110 can also receive the data from the radar sensor circuit 130A and perform signal processing for determining a distance or range between a target object and radar system 100A, a velocity of the target object, an angle of arrival for the target object, and the like. The signal processor 175 can provide the calculated values to the storage 180 and/or to other systems via the interface 190.

The interface 190 can enable the MCPU 110 to communicate with other systems over local and wide area networks, the internet, automotive communication buses, and/or other kinds of wired or wireless communication systems, for example. The MCPU 110 can provide the calculated values over the interface 190 to other systems and devices. For example, the radar system 100A is included in a communication base station and provides the calculated values of distance, velocity, and angle of arrival to user devices, such as vehicles in the proximity of the communication base station. As another example, the radar system 100A is included in a vehicle's driver assistance system and provides the calculated values of distance, velocity, and angle of arrival to the driver assistance systems of other nearby vehicles. The storage 180 can be used to store instructions for the MCPU 110, received data from the radar sensor circuit 130A, calculated values from the signal processor 175, and the like. Storage 180 can be any appropriate storage medium, such as a volatile or non-volatile memory.

The radar sensor circuit 130A includes the sensing signal generator 135, a transmitter 140, a receiver 155, and a baseband processor 160. The sensing signal generator 135 can include a local oscillator, for example, and generates radar sensing signals and provides them to the transmitter 140. For example, the sensing signal generator 135 can frequency modulate a continuous wave signal to form a series of linear chirp signals. The transmitted chirp signal of a known, stable frequency continuous wave varies up and down in frequency over a fixed period of time by the modulated signal. The sensing signal generator 135 provides the generated chirp signals to the transmitter 140, which drives the first antenna array 145 of one or more transmitter (TX) antennas. The second antenna array 150 comprises one or more receiver (RX) antennas and receives signals reflected from objects in the path of the transmitted chirp signals from the TX antenna array 145. The TX antenna array 145 and the RX antenna array 150 can be stationary or configured to transmit and receive across a range of area, such as by mechanical movement.

The receiver 155 receives the reflected signals from the RX antenna array 150 and provides them to the baseband processor 160. The baseband processor 160 also receives the transmitted sensing signals from the sensing signal generator 135 and down-converts the received sensing signals directly into the baseband using the copy of the transmitted sensing signals from the sensing signal generator 135. The baseband processor 160 can then filter and amplify the baseband signal. The baseband processor 160 provides the filtered and amplified baseband signal to the ADC 170, which digitizes the signal and provides it to the MCPU 110. The signal processor 175 in the MCPU 110 can then perform time domain to frequency domain transforms such as fast Fourier transforms (FFTs) and other signal processing to determine the distance, velocity, and angle of arrival between the target object and the radar system 100.

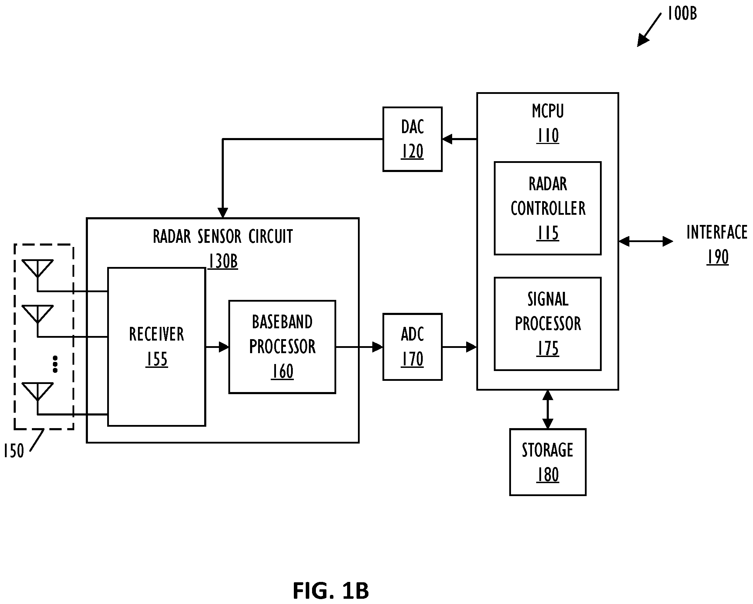

FIG. 1B shows, in block diagram form, an example radar receiver system 100B, according to one embodiment. The radar receiver system 100B is similar to the radar transceiver system 100A shown in FIG. 1A but includes the radar sensor circuit 130B instead of the radar sensor circuit 130A. For ease of illustration, the radar receiver system 100B is described herein with reference to the radar transceiver system 100A shown in FIG. 1A. The radar sensor circuit 130B includes the receiver 155 and the baseband processor 160 and is configured for passive radar sensing only; that is, the radar sensor circuit 130B enables the radar receiver system 100B to passively receive radar signals transmitted by other, nearby radar sensing systems such as the radar transceiver system 100A.

The antenna array 150 comprises one or more receiver (RX) antennas and receives signals reflected from objects in the path of transmitted radar signals, such as transmitted radar signals from a nearby communication base station. The RX antenna array 150 can be stationary or configured to receive across a range of area, such as by mechanical movement. The receiver 155 receives the reflected signals from the RX antenna array 150 and provides them to the baseband processor 160. The baseband processor 160 down-converts the received radar signals directly into the baseband and then filter and amplify the baseband signal. The baseband processor 160 provides the filtered and amplified baseband signal to the ADC 170, which digitizes the signal and provides it to the MCPU 110. The signal processor 175 in the MCPU 110 can then perform time domain to frequency domain transforms such as fast Fourier transforms (FFTs) and other signal processing to determine the distance, velocity, and angle of arrival between the target object and the radar system 100B.

For both the radar transceiver system 100A shown in FIG. 1A and the radar receiver system 100B shown in FIG. 1B, frequency differences between the received reflections and the transmitted sensing signal increase with delay and so are proportional to distance. The phase differences between the received reflections across consecutive chirps in a radar frame are indicative of the velocity of objects in the field of view. For implementations in which RX antenna array 150 includes two or more receiver antennas, the phase difference between received reflections at a first RX antenna and received reflections at a second RX antenna can be used to determine the angle of arrival of target objects. For example, the down-converted and digitized receive signal corresponding to each chirp is first transformed using an FFT (called the range FFT). The range FFT produces a series of range bins with the value of each range bin denoting the signal strength of reflected targets at the corresponding range. A Doppler FFT is then performed for each range bin across all the chirps in a frame to estimate the velocities of reflected targets. Additional processing can then be performed to determine the angle of arrival between the targets and the radar system 100.

For an implementation in which the radar transceiver system 100A is included in a communication base station, the communication base station can use the determined distance, velocity, and angle of arrival for objects in the field of view from the radar system 100A to provide information about objects in the environment to other devices in the proximity of the communication base station. For example, the communication base station can provide environmental information to vehicles moving through the field of view of the radar system 100A. The communication base station can incorporate radar sensing slots into the communication frame between the communication base station and a nearby vehicle, such that the base station is able to provide meaningful environmental information without disrupting normal communications between the base station and the nearby vehicle.

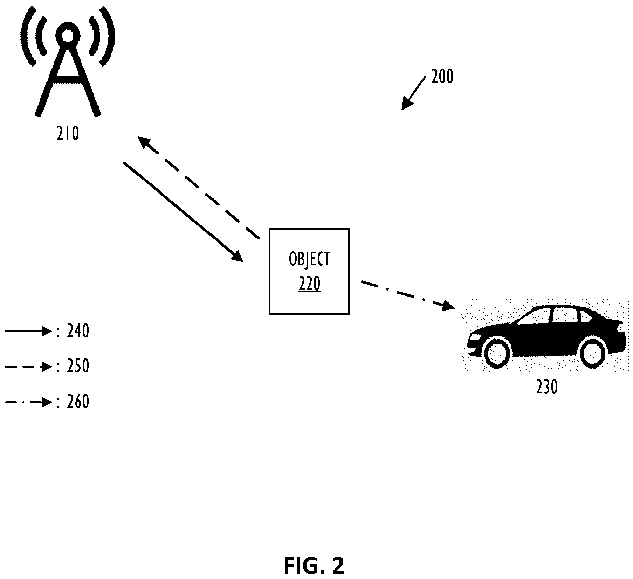

FIG. 2 shows a diagram 200 of transmitted and received signals from an example base station 210 and an example user device 230 in a passive sensing mode of operation, according to one embodiment. In this example, the base station 210 includes the radar transceiver system 100A shown in FIG. 1A, and the user device 230 is a vehicle that includes the radar receiving system 100B shown in FIG. 1B. The base station 210 transmits a signal 240 that includes one or more sensing signal frames and metadata indicative of the sensing resources used, such as which slots in a communication frame are used for the radar sensing, a frequency band used for the radar sensing, waveform indices, beamforming indices, and the like. The waveform and beamforming indices can comply with a known standard for indicating waveform and beamforming parameters. The transmitted signal 240 is reflected off an object 220 in the environment, such as another vehicle, a construction zone, a pedestrian, or other obstacle for the user device 230.

The base station 210 receives a first reflected signal 250 and can perform signal processing to determine a distance between the object 220 and the base station 210, a velocity of the object 220, an angle of arrival of the object 220, or any combination thereof. Similarly, the user device 230 receives a second reflected signal 260 and can perform signal processing during the slots in the communication frame that are used for radar sensing and based on the metadata in the transmitted signal 240 to determine a distance between the object 220 and the user device 230, a velocity of the object 220, an angle of arrival of the object 220, or any combination thereof.

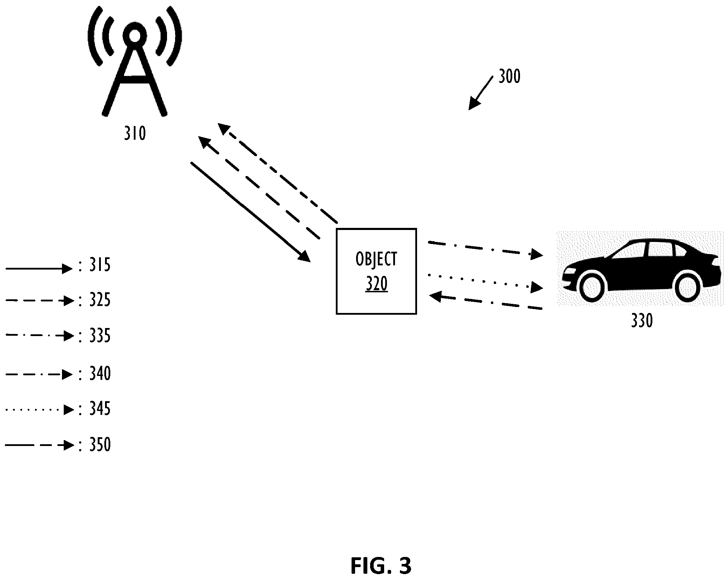

FIG. 3 shows a diagram 300 of transmitted and received signals from an example base station 310 and an example user device 330 in an active sensing mode of operation, according to one embodiment. In this example, the base station 310 and the user device 330 include radar systems such as the radar transceiver system 100A shown in FIG. 1A, and the user device 330 is a vehicle. The base station 310 transmits a signal 315 that includes one or more sensing signal frames and metadata indicative of the sensing resources used, such as which slots in a communication frame are used for the radar sensing, a frequency band used for the radar sensing, waveform indices, beamforming indices, and the like. The waveform and beamforming indices can comply with a known standard for indicating waveform and beamforming parameters. The transmitted signal 315 is reflected off an object 320 in the environment, such as another vehicle, a construction zone, a pedestrian, or other obstacle for the user device 330.

The base station 310 receives a first reflected signal 325 and can perform signal processing to determine a distance between the object 320 and the base station 310, a velocity of the object 320, an angle of arrival of the object 320, or any combination thereof. Similarly, the user device 330 receives a second reflected signal 335, which can be too weak for the user device 330 to perform signal processing to determine a distance between the object 320 and the user device 330, a velocity of the object 320, an angle of arrival of the object 320, and the like. In response to the second reflected signal 335 not satisfying a threshold signal strength for effective signal processing or in addition to second reflected signal 335 being effective for signal processing, the user device 330 can perform active sensing. That is, the user device 330 can generate one or more radar sensing signal frames having characteristics that reduce interference with the radar sensing signal frames in transmitted signal 315 from the base station 310 based on the metadata in the transmitted signal 315 and other information such as global positioning system coordinates.

For example, the user device 330 can generate radar sensing signal frames in the same frequency band and having the same waveform and beamforming indices as indicated in the metadata from base station 310 in response to the second reflected signal 335 being too weak to conflict with the radar sensing signal frames generated by the user device 330. As another example, the second reflected signal 335 is effective for signal processing, and the user device 330 can generate one or more radar sensing signal frames in a different frequency band, having different waveform indices, having different beamforming indices, or any combination thereof from the radar sensing signal frames in transmitted signal 315 from the base station 310.

The user device 330 transmits a radar sensing signal 340 that includes the one or more generated radar sensing signal frames that do not conflict with the radar sensing signal frames in transmitted signal 315 from the base station 310. The transmitted signal 340 is reflected off the object 320 in the environment, and the user device 330 receives a first reflected signal 345. The user device 330 can then perform signal processing to determine a distance between the object 320 and the user device 330, a velocity of the object 320, an angle of arrival of the object 320, or any combination thereof. Similarly, the base station 310 receives a second reflected signal 350 and can perform signal processing to further refine the distance between the object 320 and the base station 310, the velocity of the object 320, the angle of arrival of the object 320, and the like determined based on the first reflected signal 325.

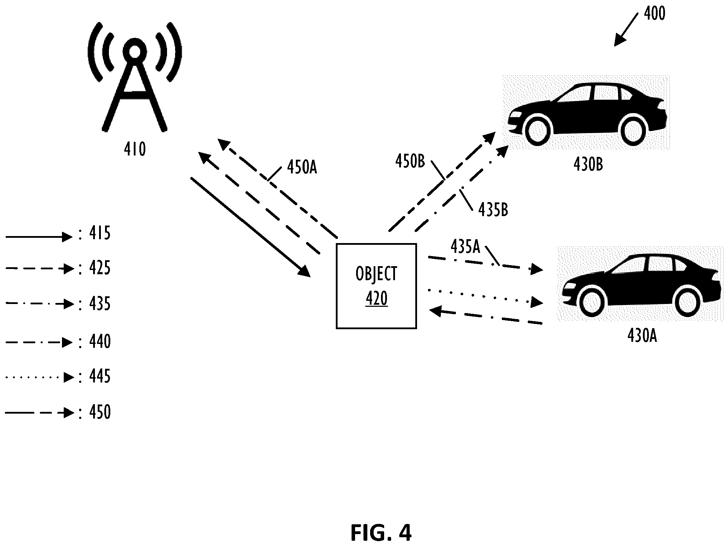

FIG. 4 shows a diagram of transmitted and received signals from an example base station 410 and user devices 430A-B in a hybrid active and passive sensing mode of operation, according to one embodiment. In this example, the base station 410 and the user devices 430A-B include radar systems such as the radar transceiver system 100A shown in FIG. 1A, and the user devices 430A-B are vehicles. The base station 410 transmits a signal 415 that includes one or more radar sensing signal frames and metadata indicative of the sensing resources used, such as which slots in a communication frame are used for the radar sensing, a frequency band used for the radar sensing, waveform indices, beamforming indices, and the like. The waveform and beamforming indices can comply with a known standard for indicating waveform and beamforming parameters. The transmitted signal 415 is reflected off an object 420 in the environment, such as another vehicle, a construction zone, a pedestrian, or other obstacle for the user devices 430A-B.

The base station 410 receives a first reflected signal 425 and can perform signal processing to determine a distance between the object 420 and the base station 410, a velocity of the object 420, an angle of arrival of the object 420, or any combination thereof. Similarly, the user device 430A receives a second reflected signal 435A, and the user device 420B receives a third reflected signal 435B. One or both of the first and second reflected signals 435A-B can be too weak for the user devices 430A-B to perform signal processing to determine a distance between the object 420 and the respective user device 430, a velocity of the object 420, an angle of arrival of the object 420, and the like. For example, the second reflected signal 435A can be too weak for the user device 430A to perform signal processing, and the third reflected signal 435B can be strong enough for the user device 430B to perform effective signal processing. The user device 430B can perform passive sensing, and the user device 430A can perform active sensing to supplement the too-weak reflected signal 435A, by generating one or more radar sensing signal frames having characteristics that reduce interference with the radar sensing signal frames in transmitted signal 415 from the base station 410 based on the metadata in the transmitted signal 415 and other information, such as the global positioning system coordinates.

For example, the user device 430A can generate radar sensing signal frames in the same frequency band and having the same waveform and beamforming indices as indicated in the metadata from base station 410 because the second reflected signal 435A is too weak to conflict with the radar sensing signal frames generated by the user device 430. As another example, the second reflected signal 435A is effective for signal processing, and the user device 430A can generate one or more radar sensing signal frames in a different frequency band, having different waveform indices, having different beamforming indices, or any combination thereof from the radar sensing signal frames in transmitted signal 415 from the base station 410.

The user device 430A transmits a radar sensing signal 440 that includes the one or more generated radar sensing signal frames that do not conflict with the radar sensing signal frames in transmitted signal 415 from the base station 410. The transmitted signal 440 is reflected off the object 420 in the environment, and the user device 430A receives a first reflected signal 445. The user device 430A can then perform signal processing to determine a distance between the object 420 and the user device 430A, a velocity of the object 420, an angle of arrival of the object 420, or any combination thereof.

Similarly, the base station 410 receives a reflected signal 450A and can perform signal processing to further refine the distance between the object 420 and the base station 410, the velocity of the object 420, the angle of arrival of the object 420, and the like determined based on the first reflected signal 425. The user device 430B receives a reflected signal 450B and can perform signal processing to further refine the distance between the object 420 and the user device 430B, the velocity of the object 420, the angle of arrival of the object 420, and the like determined based on the third reflected signal 435B. The user devices 430A-B can collaborate together and with the base station 410 by sharing timestamped signals 435A-B and 450A-B to derive range, Doppler information, and the like.

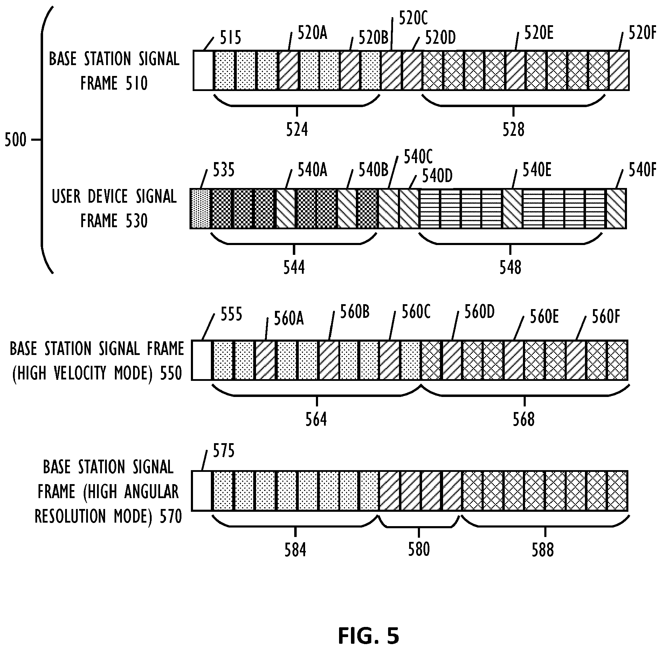

FIG. 5 shows diagrams of signal frames for the base station 210 and user device 230 shown in FIG. 2, according to some embodiments. For ease of illustration, FIG. 5 is described herein with reference to the diagram 200 shown in FIG. 2, but the signal frames shown in FIG. 5 are also applicable to the diagram 300 shown in FIG. 3 and the diagram 400 shown in FIG. 4. The diagram 500 includes a base station signal frame 510 and a corresponding user device signal frame 530. The base station signal frame 510 includes a metadata slot 515, a set 520 of radar sensing slots, a set 524 of downlink communication slots, and a set 528 of uplink communication slots. The set 520 of radar sensing slots are interspersed among slots in the set 524 of downlink communication slots and the set 528 of uplink communication slots. The user device signal frame 530 includes a metadata slot 535, a set 540 of radar sensing slots, a set 544 of receiving communication slots, and a set 548 of transmitting communication slots. The set 540 of radar sensing slots are interspersed among slots in the set 544 of receiving communication slots and the set 548 of transmitting communication slots.

The user device signal frame 530 mirrors the base station signal frame 510, such that the set 524 of downlink communication slots in the base station signal frame 510 corresponds to the set 544 of receiving communication slots in the user device signal frame 530 and the set 528 of uplink communication slots in the base station signal frame 510 corresponds to the set 548 of transmitting communication slots in the user device signal frame 530. Similarly, the set 520 of radar sensing slots in the base station signal frame 510 correspond to the set 540 of radar sensing slots in the user device signal frame 530. Further, the user device signal frame 530 can be a radar sensing frame and include a set 524 of transmitting radar slots and a set 528 of receiving radar slots.

At a first time slot in the base station signal frame 510, the base station 210 transmits metadata 515 about the radar sensing to the user device 230. The metadata 515 can be indicative of the sensing resources used, such as which time slots in the base station signal frame 510 are used for the radar sensing 520, a frequency band used for the radar sensing, waveform indices, beamforming indices, and the like. At a corresponding first time slot in the user device signal frame 530, the user device 230 receives the metadata 535 from the base station 210. In this example, the metadata 515 is transmitted at the first time slot in the base station signal frame 510, but in other examples, the base station 210 transmits the metadata 515 at another, later time slot in the base station signal frame 510 but before a first radar sensing slot 520A.

After the metadata slot 515, the base station signal frame 510 includes the set 524 of downlink communication slots during which the base station 210 transmits information to the user device 230. Similarly, after the metadata slot 535, the user device signal frame 530 includes the set 544 of receiving communication slots during which the user device 230 receives the information transmitted by the base station 210. The base station signal frame 510 then includes the set 528 of uplink communication slots during which the base station 210 receives information from the user device 230. Similarly, the user device signal frame 530 includes the set 548 of transmitting communication slots during which the user device 230 transmits information to the base station 210. That is, while the base station 210 transmits information to the user device 230 during the set 524 of downlink communication slots, the user device 230 receives the information during the set 544 of receiving communication slots. While the user device 230 transmits information to the base station 210 during the set 548 of transmitting communication slots, the base station 210 receives the information during the set 528 or uplink communication slots.

The radar sensing slots 520 in the base station signal frame 510 are interspersed among the set 524 of the downlink communication slots and the set 528 of the uplink communication slots, and the radar sensing slots 540 in the user device signal frame 530 are interspersed at corresponding slots among the set 544 of receiving communication slots and the set 548 of transmitting communication slots. That is, while the base station 210 transmits one or more radar sensing signal frames to perform radar sensing during the radar sensing slots 520 in the base station signal frame 510, one or more receivers in the user device 230 remain turned on and receive the second reflected signal 260, such that the user device 230 can perform passive sensing based on the second reflected signal 260 during the radar sensing slots 540 in the user device signal frame 530. As another example with respect to the diagram 300 shown in FIG. 3, while the base station 310 transmits one or more radar sensing signal frames to perform radar sensing during the radar sensing slots 520 in the base station signal frame 510, one or more transmitters and receivers in the user device 330 are turned on, such that the user device 330 can generate radar sensing signals 340 and receive reflected signals 345 to perform active sensing.

The numbers of downlink communication slots in the set 524, uplink communication slots in the set 528, and radar sensing slots 520 in the base station signal frame 510 and the numbers of receiving communication slots in the set 544, transmitting communication slots in the set 548, and radar sensing slots 540 in the user device signal frame 530 in the diagram 500 are by way of example only, and can vary based on the particular communication standard implemented. In addition, the location of the radar sensing slots 520 and 540 within the base station signal frame 510 and the user device signal frame 530, respectively, can vary based on the desired accuracy and other characteristics of the radar sensing.

For example as shown in base station signal frame 550, the base station 210 can operate in a high velocity sensing mode to use radar sensing data to determine the velocity of fast moving objects 220 in the environment. In the high velocity sensing mode, the radar sensing slots 560 can be interspersed at regular intervals among the set 564 of downlink communication slots and the set 568 of uplink communication slots. The number of radar sensing slots 560 and the intervals at which the radar sensing slots 560 are interspersed with the set 564 of downlink communication slots and the set 568 of uplink communication slots can be chosen based on an expected speed of fast moving objects 220 in the environment. For example, the base station 210 can be positioned along a highway, and the posted speed limit of the highway can be used as the expected speed of fast moving objects 220 and to determine the appropriate number and interleaving of radar sensing slots 560 within the base station signal frame 550. A user device signal frame, not shown, corresponds to the base station signal frame 550 for a high velocity sensing mode.

As another example shown in base station signal frame 570, the base station 210 can operate in a high angular resolution mode to use radar sensing data to determine the angle of arrival of objects 220 in the environment with a higher accuracy than in other operating modes. In the high angular resolution mode, the radar sensing slots 580 can be grouped together in a single block between the set 584 of downlink communication slots and the set 588 of uplink communication slots. The number of radar sensing slots 580 to be grouped together in the base station signal frame 570 can be chosen based on an expected range of angles of arrival of objects 220 in the environment. For example, the base station 210 can be positioned along a highway, and the oncoming lanes of the highway occupy a particular range of the field of view of the radar system included in the base station 210. The particular range of the field of view of the radar system can be used to determine the appropriate number of radar sensing slots 580 in the base station signal frame 570. A user device signal frame, not shown, corresponds to the base station signal frame 570 for a high angular resolution mode.

In addition, the base station can change the mode of operation, such that the communication signal frame format changes. For example, at a first time the base station 210 can operate in a normal mode of operation and use the base station signal frame 510 to communicate with the user device 230. At a second, later time, the base station 210 can change to either of the high velocity sensing mode and the high angular resolution mode and use the corresponding base station signal frame 550 or 570, respectively.

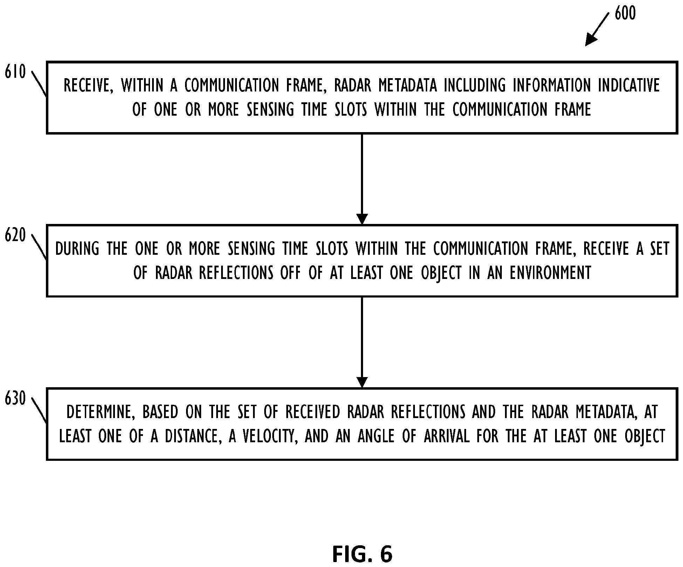

FIG. 6 shows, in flow chart form, an example process 600 for operating a radar receiver system in a passive sensing mode of operation, according to one embodiment. For ease of illustration, the process 600 is described herein with reference to diagram 200 shown in FIG. 2. The process 600 can be performed by any appropriate processing unit executing instructions stored in any appropriate non-transitory computer-readable medium. The steps of process 600 are shown in a particular order in FIG. 6, but the steps of process 600 may be performed in a different order and/or with some steps performed simultaneously. One or more steps of process 600 can be optional, and process 600 can include additional steps.

The process 600 begins at step 610, and the user device 230 receives radar metadata including information indicative of one or more sensing time slots within a communication frame. At step 620 and during the one or more sensing time slots within the communication frame, the user device 230 receives a set of radar reflections 260 off of at least one object 220 in an environment. At step 630, the user device 230 determines at least one of a distance, a velocity, and an angle of arrival for the at least one object 220 based on the set of received radar reflections 260 and the radar metadata.

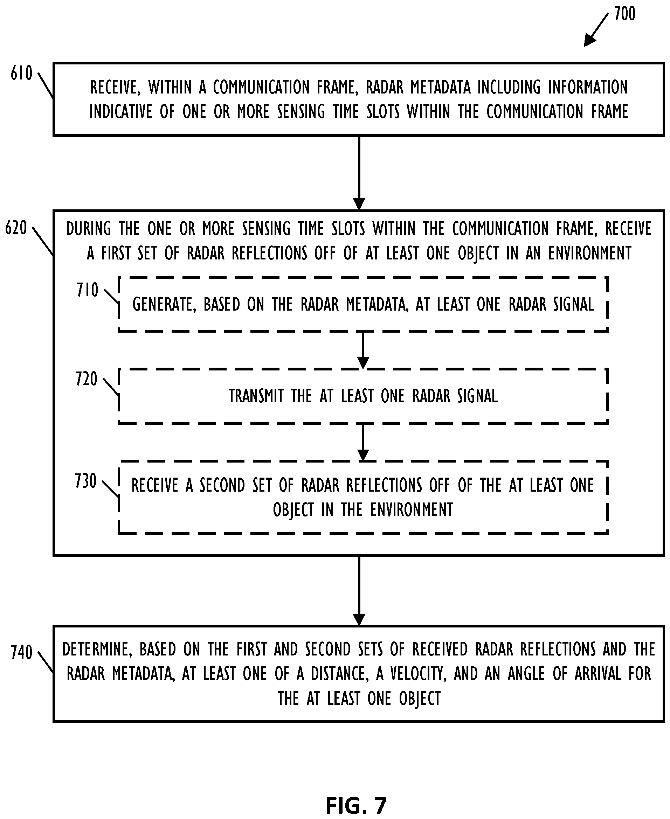

FIG. 7 shows, in flow chart form, an example process 700 for operating a radar transceiver system in an active sensing mode of operation, according to one embodiment. For ease of illustration, the process 700 is described herein with reference to diagram 300 shown in FIG. 3 and the process 600 shown in FIG. 6. The process 700 can be performed by any appropriate processing unit executing instructions stored in any appropriate non-transitory computer-readable medium. The steps of process 700 are shown in a particular order in FIG. 7, but the steps of process 700 may be performed in a different order and/or with some steps performed simultaneously. One or more steps of process 700 can be optional, and process 700 can include additional steps.

The process 700 begins at step 610, at which the user device 330 receives radar metadata including information indicative of one or more sensing time slots within a communication frame. At step 620 and during the one or more sensing time slots within the communication frame, the user device 330 receives a set of radar reflections 335 off of at least one object 320 in an environment. Receiving the set of radar reflections 335 at step 620 can optionally include steps 710, 720, and 730. At step 710, the user device 330 generates, based on the radar metadata, at least one radar signal 340. At step 720, the user device 330 transmits the at least one radar signal 340 and at step 730, receives a second set of radar reflections 345 off of the at least one object 320 in the environment. At step 740, the user device 330 determines at least one of a distance, a velocity, and an angle of arrival for the at least one object 320 based on the first and second sets of received radar reflections 335 and 345 and the radar metadata.

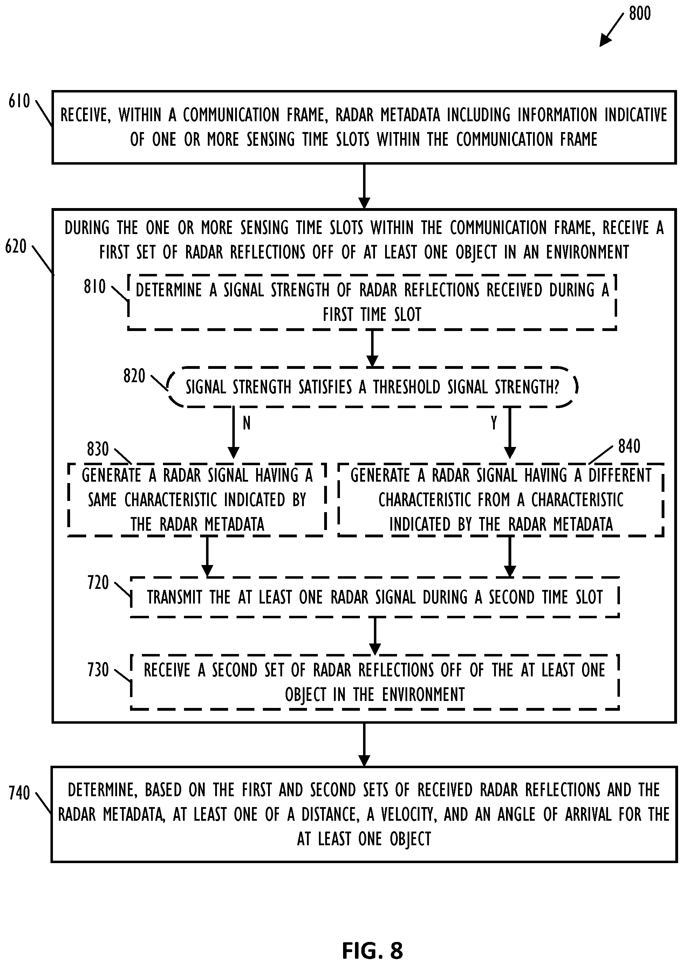

FIG. 8 shows, in flow chart form, another example process 800 for operating a radar transceiver system in an active sensing mode of operation, according to one embodiment. For ease of illustration, the process 800 is described herein with reference to diagram 300 shown in FIG. 3 and the processes 600 and 700 shown in FIGS. 6 and 7, respectively. The process 800 can be performed by any appropriate processing unit executing instructions stored in any appropriate non-transitory computer-readable medium. The steps of process 800 are shown in a particular order in FIG. 8, but the steps of process 800 may be performed in a different order and/or with some steps performed simultaneously. One or more steps of process 800 can be optional, and process 800 can include additional steps.

The process 800 begins at step 610, at which the user device 330 receives radar metadata including information indicative of one or more sensing time slots within a communication frame. At step 620 and during the one or more sensing time slots within the communication frame, the user device 330 receives a first set of radar reflections 335 off of at least one object 320 in an environment. Receiving the set of radar reflections 335 at step 620 can optionally include steps 810, 820, 830, 840, 720, and 730. At step 810, the user device 330 determines a signal strength of the radar reflections 335 received during a first time slot of the one or more sensing time slots within the communication frame. At step 820, the user device 330 determines whether the signal strength satisfies a threshold signal strength.

In response to the signal strength not satisfying the threshold signal strength, the user device proceeds to step 830 and generates a radar signal 340 having a same characteristic indicated by the radar metadata. In response to the signal strength satisfying the threshold signal strength, the user device proceeds to step 840 and generates a radar signal 340 having a different characteristic from a characteristic indicated by the radar metadata. At step 720, the user device 330 transmits the radar signal 340 generated at step 830 or step 840, and at step 730, receives a second set of radar reflections 345 off of the at least one object 320 in the environment. At step 740, the user device 330 determines at least one of a distance, a velocity, and an angle of arrival for the at least one object 320 based on the first and second sets of received radar reflections 335 and 345 and the radar metadata.

As discussed previously herein, the disclosed techniques and methods allow user devices to leverage radar sensing slots in a communication frame while base stations perform radar sensing to perform passive, active, or hybrid radar sensing. Before the first radar sensing time slot in a communication frame, the base station transmits radar metadata, such as which time slots in the communication frame are dedicated to radar sensing and a frequency band, waveform sequence, and beamforming indices for the radar sensing signals generated by the base station. The user device can turn on a radar receiver during the radar sensing time slots and receive reflections of the radar signals transmitted by the base station off of objects in the environment. Based on the received reflections and the radar metadata, the user device can perform passive sensing to determine the distance, velocity, and angle of arrival between the objects in the environment and the user device.

In addition to or instead of performing passive sensing based on the received reflections from the base station radar sensing and the radar metadata, the user device can perform active sensing by generating and transmitting radar sensing signals having characteristics chosen to reduce interference with radar sensing signals from the base station. For example, the user device can generate radar sensing signals in a different frequency band than the frequency band indicated by the radar metadata, or in a same frequency band but different signal strength than the radar sensing signals from the base station. The user device can then share the determined distance, velocity, and angle of arrival between the objects in the environment and the user device with the base station or other nearby user devices.

Features specifically shown or described with respect to one embodiment set forth herein may be implemented in other embodiments set forth herein.

In this description, the term "couple" may cover connections, communications, or signal paths that enable a functional relationship consistent with this description, including intermediate or intervening components that do not alter the functional relationship. A device that is "configured to" perform a task or function may be configured by programming or hardwiring, for example, at a time of manufacturing by a manufacturer and/or may be configurable or reconfigurable by a user after manufacturing. The configuring may be done through firmware and/or software, construction and/or layout of hardware components and connections, or any combination thereof. As used herein, "node", "pin", and "lead" are used interchangeably. A circuit or device described herein as including certain components may be adapted to be coupled to those components instead, to form the described circuitry or device.

While particular embodiments of the present invention have been shown and described, it will be recognized to those skilled in the art that, based upon the teachings herein, further changes and modifications may be made without departing from this invention and its broader aspects, and thus, the appended claims are to encompass within their scope all such changes and modifications as are within the true spirit and scope of this invention.

A radar system includes at least one receiver, at least one processor, and at least one non-transitory computer-readable medium storing machine instructions. The machine instructions, when executed by the at least one processor, cause the at least one processor to receive, within a communication frame, radar metadata including information indicative of one or more sensing time slots within the communication frame. During the one or more sensing time slots, the processor causes the at least one receiver to obtain a set of radar reflections off of at least one object in an environment and determines, based on the set of received radar reflections and the radar metadata, at least one of a distance between the at least one object and the radar system, a velocity of the at least one object, and an angle of arrival for the at least one obj ect.

In some implementations, the radar system is a first radar system, and the set of radar reflections are radar signals transmitted by a second radar system and reflected off of the at least one object in the environment. In some implementations, the radar metadata includes information indicative of at least one of a frequency band of the radar signals transmitted by the second radar system, a waveform sequence of the radar signals transmitted by the second radar system, and beamforming indices of the radar signals transmitted by the second radar system.

In some implementations, the first radar system further comprises at least one transmitter, and the set of radar reflections are a first set of radar reflections. The at least one non-transitory computer-readable medium further comprises machine instructions which, when executed by the at least one processor, cause the at least one processor to generate, based on the radar metadata, at least one radar signal. The at least one processor causes the at least one transmitter to transmit the at least one radar signal and causes the at least one receiver to obtain a second set of radar reflections off of the at least one object in the environment. The at least one processor determines, based on the second set of received radar reflections, the at least one of the distance between the at least one object and the first radar system, the velocity of the at least one object, and the angle of arrival for the at least one object.

In some implementations, the one or more sensing time slots include a first time slot and a second time slot, and the at least one non-transitory computer-readable medium further includes machine instructions which, when executed by the at least one processor, cause the at least one processor to determine a signal strength of radar reflections received during the first time slot. For the second time slot and in response to the signal strength not satisfying a threshold signal strength, the at least one radar signal has at least one same characteristic indicated by the radar metadata. For the second time slot and in response to the signal strength satisfying the threshold signal strength, the at least one radar signal has at least one characteristic different from a characteristic indicated by the radar metadata. In some implementations, the at least one characteristic different from the characteristic indicated by the radar metadata is chosen to reduce interference between the at least one radar signal and the radar signals transmitted by the second radar system.

In some implementations, the communication frame comprises the one or more sensing time slots, a number of receiving communication time slots, and a number of transmitting communication time slots. The one or more sensing time slots are interspersed among the number of receiving communication time slots and the number of transmitting communication time slots. In some implementations, the one or more sensing time slots are interspersed among the number of receiving communication time slots and the number of transmitting communication time slots such that fast moving objects in the environment can be detected. In some implementations, the communication frame comprises a radar frame having the one or more sensing time slots, a number of receiving radar time slots, and a number of transmitting radar time slots, and the one or more sensing time slots are interspersed among the number of receiving radar time slots and the number of transmitting radar time slots.

A method includes receiving, by a radar system and within a communication frame, radar metadata including information indicative of one or more sensing time slots within the communication frame. During the one or more sensing time slots, at least one receiver of the radar system is caused to obtain a set of radar reflections off of at least one object in an environment, at least one of a distance between the at least one object and the radar system, a velocity of the at least one object, and an angle of arrival for the at least one object is determined based on the set of received radar reflections and the radar metadata. In some implementations, the radar system is a first radar system, and the set of radar reflections are radar signals transmitted by a second radar system and reflected off of the at least one object in the environment. In some implementations, the radar metadata includes information indicative of at least one of a frequency band of the radar signals transmitted by the second radar system, a waveform sequence of the radar signals transmitted by the second radar system, and beamforming indices of the radar signals transmitted by the second radar system.

In some implementations, the set of radar reflections are a first set of radar reflections, and the method further includes generating, based on the radar metadata, at least one radar signal and causing at least one transmitter of the first radar system to transmit the at least one radar signal. The at least one receiver obtains a second set of radar reflections off of the at least one object in the environment, and the at least one of the distance between the at least one object and the radar system, the velocity of the at least one object, and the angle of arrival for the at least one object is determined based on the second set of received radar reflections.

In some implementations, the one or more sensing time slots include a first time slot and a second time slot, and the method further includes determining a signal strength of radar reflections received during the first time slot. For the second time slot and in response to the signal strength not satisfying a threshold signal strength, the at least one radar signal is caused to have at least one same characteristic indicated by the radar metadata. For the second time slot and in response to the signal strength satisfying the threshold signal strength, the at least one radar signal is caused to have at least one different characteristic indicated by the radar metadata. In some implementations, the at least one characteristic different from the characteristic indicated by radar metadata is chosen to reduce interference between the at least one radar signal and the radar signals transmitted by the second radar system.

A non-transitory computer-readable medium stores machine instructions which, when executed by at least one processor, cause the at least one processor to receive, within a communication frame, a radar metadata including information indicative of one or more sensing time slots within the communication frame. During the one or more sensing time slots, the at least one processor causes at least one receiver of a radar system to obtain a set of radar reflections off of at least one object in an environment and determines, based on the set of received radar reflections and the radar metadata, at least one of a distance between the at least one object and the radar system, a velocity of the at least one object, and an angle of arrival for the at least one object. In some implementations, the radar system is a first radar system, and the set of radar reflections are radar signals transmitted by a second radar system and reflected off of the at least one object in the environment.

In some implementations, the set of radar reflections are a first set of radar reflections, and the non-transitory computer-readable medium further stores machine instructions which, when executed by the at least one processor, cause the at least one processor to generate, based on the radar metadata, at least one radar signal and cause at least one transmitter of the first radar system to transmit the at least one radar signal. The machine instructions further cause the at least one processor to cause the at least one receiver to obtain a second set of radar reflections off of the at least one object in the environment and determine, based on the second set of received radar reflections, the at least one of the distance between the at least one object and the radar system, the velocity of the at least one object, and the angle of arrival for the at least one object.

In some implementations, the one or more sensing time slots include a first time slot and a second time slot, and the non-transitory computer-readable medium further stores machine instructions which, when executed by the at least one processor, cause the at least one processor to determine a signal strength of radar reflections received during the first time slot. For the second time slot and in response to the signal strength not satisfying a threshold signal strength, the at least one radar signal has at least one same characteristic indicated by the radar metadata. For the second time slot and in response to the signal strength satisfying the threshold signal strength, the at least one radar signal has at least one characteristic different from a characteristic indicated by the radar metadata. In some implementations, the at least one characteristic different from the characteristic indicated by the radar metadata is chosen to reduce interference between the at least one radar signal and the radar signals transmitted by the second radar system.

Embodiments of the present disclosure may include features recited in the following numbered clauses:
1. A radar system, comprising: at least one receiver; at least one processor; and at least one non-transitory computer-readable medium storing machine instructions which, when executed by the at least one processor, cause the at least one processor to: receive, within a communication frame, radar metadata including information indicative of one or more sensing time slots within the communication frame; during the one or more sensing time slots, cause the at least one receiver to obtain a set of radar reflections off of at least one object in an environment; and determine, based on the set of received radar reflections and the radar metadata, at least one of a distance between the at least one object and the radar system, a velocity of the at least one object, and an angle of arrival for the at least one object.
2. The radar system of clause 1, wherein the radar system is a first radar system, wherein the set of radar reflections are radar signals transmitted by a second radar system and reflected off of the at least one object in the environment.
3. The radar system of clause 2, further comprising at least one transmitter, wherein the set of radar reflections are a first set of radar reflections, wherein the at least one non-transitory computer-readable medium further comprises machine instructions which, when executed by the at least one processor, cause the at least one processor to: generate, based on the radar metadata, at least one radar signal; cause the at least one transmitter to transmit the at least one radar signal; cause the at least one receiver to obtain a second set of radar reflections off of the at least one object in the environment; and determine, based on the second set of received radar reflections, the at least one of the distance between the at least one object and the first radar system, the velocity of the at least one object, and the angle of arrival for the at least one object.
4. The radar system of clause 3, wherein: the one or more sensing time slots include a first time slot and a second time slot; the at least one non-transitory computer-readable medium further comprises machine instructions which, when executed by the at least one processor, cause the at least one processor to determine a signal strength of radar reflections received during the first time slot; for the second time slot and in response to the signal strength not satisfying a threshold signal strength, the at least one radar signal has at least one same characteristic indicated by the radar metadata; and for the second time slot and in response to the signal strength satisfying the threshold signal strength, the at least one radar signal has at least one characteristic different from a characteristic indicated by the radar metadata.
5. The radar system of clause 4, wherein the at least one characteristic different from the characteristic indicated by the radar metadata is chosen to reduce interference between the at least one radar signal and the radar signals transmitted by the second radar system.
6. The radar system of clause 2, wherein the radar metadata further includes information indicative of at least one of a frequency band of the radar signals transmitted by the second radar system, a waveform sequence of the radar signals transmitted by the second radar system, and beamforming indices of the radar signals transmitted by the second radar system.
7. The radar system of clause 1, wherein the communication frame comprises the one or more sensing time slots, a number of receiving communication time slots, and a number of transmitting communication time slots, and wherein the one or more sensing time slots are interspersed among the number of receiving communication time slots and the number of transmitting communication time slots.
8. The radar system of clause 1, wherein the communication frame comprises the one or more sensing time slots, a number of receiving communication time slots, and a number of transmitting communication time slots, wherein the one or more sensing time slots are interspersed among the number of receiving communication time slots and the number of transmitting communication time slots such that fast moving objects in the environment can be detected.
9. The radar system of clause 1, wherein the communication frame comprises a radar frame having the one or more sensing time slots, a number of receiving radar time slots, and a number of transmitting radar time slots, and wherein the one or more sensing time slots are interspersed among the number of receiving radar time slots and the number of transmitting radar time slots.
10. A method, comprising: receiving, by a radar system and within a communication frame, radar metadata including information indicative of one or more sensing time slots within the communication frame; during the one or more sensing time slots, causing at least one receiver of the radar system to obtain a set of radar reflections off of at least one object in an environment; and determining, based on the set of received radar reflections and the radar metadata, at least one of a distance between the at least one object and the radar system, a velocity of the at least one object, and an angle of arrival for the at least one object.
11. The method of clause 10, wherein the radar system is a first radar system, wherein the set of radar reflections are radar signals transmitted by a second radar system and reflected off of the at least one object in the environment.
12. The method of clause 11, wherein the set of radar reflections are a first set of radar reflections, the method further comprising: generating, based on the radar metadata, at least one radar signal; causing at least one transmitter of the first radar system to transmit the at least one radar signal; causing the at least one receiver to obtain a second set of radar reflections off of the at least one object in the environment; and determining, based on the second set of received radar reflections, the at least one of the distance between the at least one object and the radar system, the velocity of the at least one object, and the angle of arrival for the at least one object.
13. The method of clause 12, wherein: the one or more sensing time slots include a first time slot and a second time slot; the method further comprises determining a signal strength of radar reflections received during the first time slot; for the second time slot and in response to the signal strength not satisfying a threshold signal strength, causing the at least one radar signal to have at least one same characteristic indicated by the radar metadata; and for the second time slot and in response to the signal strength satisfying the threshold signal strength, causing the at least one radar signal to have at least one characteristic different from a characteristic indicated by the radar metadata.
14. The method of clause 13, wherein the at least one characteristic different from the characteristic indicated by the radar metadata is chosen to reduce interference between the at least one radar signal and the radar signals transmitted by the second radar system.
15. The method of clause 11, wherein the radar metadata further includes information indicative of at least one of a frequency band of the radar signals transmitted by the second radar system, a waveform sequence of the radar signals transmitted by the second radar system, and beamforming indices of the radar signals transmitted by the second radar system.
16. A non-transitory computer-readable medium storing machine instructions which, when executed by at least one processor, cause the at least one processor to: receive, within a communication frame, radar metadata including information indicative of one or more sensing time slots within the communication frame; during the one or more sensing time slots, cause at least one receiver of a radar system to obtain a set of radar reflections off of at least one object in an environment; and determine, based on the set of received radar reflections and the radar metadata, at least one of a distance between the at least one object and the radar system, a velocity of the at least one object, and an angle of arrival for the at least one object.
17. The non-transitory computer-readable medium of clause 16, wherein the radar system is a first radar system, wherein the set of radar reflections are radar signals transmitted by a second radar system and reflected off of the at least one object in the environment.
18. The non-transitory computer-readable medium of clause 17, wherein the set of radar reflections are a first set of radar reflections, wherein the non-transitory computer-readable medium further comprises machine instructions which, when executed by the at least one processor, cause the at least one processor to: generate, based on the radar metadata, at least one radar signal; cause at least one transmitter of the first radar system to transmit the at least one radar signal; cause the at least one receiver to obtain a second set of radar reflections off of the at least one object in the environment; and determine, based on the second set of received radar reflections, the at least one of the distance between the at least one object and the radar system, the velocity of the at least one object, and the angle of arrival for the at least one object.
19. The non-transitory computer-readable medium of clause 18, wherein: the one or more sensing time slots include a first time slot and a second time slot; the non-transitory computer-readable medium further comprises machine instructions which, when executed by the at least one processor, cause the at least one processor to determine a signal strength of radar reflections received during the first time slot; for the second time slot and in response to the signal strength not satisfying a threshold signal strength, the at least one radar signal has at least one same characteristic indicated by the radar metadata; and for the second time slot and in response to the signal strength satisfying the threshold signal strength, the at least one radar signal has at least one characteristic different from a characteristic indicated by the radar metadata.
20. The non-transitory computer-readable medium of clause 19, wherein the at least one characteristic different from the characteristic indicated by the radar metadata is chosen to reduce interference between the at least one radar signal and the radar signals transmitted by the second radar system.

## Claims

1. A radar system, comprising:
at least one receiver;
at least one processor; and
at least one non-transitory computer-readable medium storing machine instructions which, when executed by the at least one processor, cause the at least one processor to:
receive, within a communication frame, radar metadata including information indicative of one or more sensing time slots within the communication frame;
during the one or more sensing time slots, cause the at least one receiver to obtain a set of radar reflections off of at least one object in an environment; and
determine, based on the set of received radar reflections and the radar metadata, at least one of a distance between the at least one object and the radar system, a velocity of the at least one object, and an angle of arrival for the at least one object.

2. The radar system of claim 1, wherein the radar system is a first radar system, wherein the set of radar reflections are radar signals transmitted by a second radar system and reflected off of the at least one object in the environment.

3. The radar system of any of claims 1 to 2, further comprising at least one transmitter, wherein the set of radar reflections are a first set of radar reflections, wherein the at least one non-transitory computer-readable medium further comprises machine instructions which, when executed by the at least one processor, cause the at least one processor to:
generate, based on the radar metadata, at least one radar signal;
cause the at least one transmitter to transmit the at least one radar signal;
cause the at least one receiver to obtain a second set of radar reflections off of the at least one object in the environment; and
determine, based on the second set of received radar reflections, the at least one of the distance between the at least one object and the first radar system, the velocity of the at least one object, and the angle of arrival for the at least one object.

4. The radar system of any of claims 1 to 3, wherein:
the one or more sensing time slots include a first time slot and a second time slot;
the at least one non-transitory computer-readable medium further comprises machine instructions which, when executed by the at least one processor, cause the at least one processor to determine a signal strength of radar reflections received during the first time slot;
for the second time slot and in response to the signal strength not satisfying a threshold signal strength, the at least one radar signal has at least one same characteristic indicated by the radar metadata; and
for the second time slot and in response to the signal strength satisfying the threshold signal strength, the at least one radar signal has at least one characteristic different from a characteristic indicated by the radar metadata.

5. The radar system of any of claims 1 to 4, wherein the at least one characteristic different from the characteristic indicated by the radar metadata is chosen to reduce interference between the at least one radar signal and the radar signals transmitted by the second radar system.

6. The radar system of any of claims 2 to 5, if dependent on claim 2, wherein the radar metadata further includes information indicative of at least one of a frequency band of the radar signals transmitted by the second radar system, a waveform sequence of the radar signals transmitted by the second radar system, and beamforming indices of the radar signals transmitted by the second radar system.

7. The radar system of any of claims 1 to 6, wherein the communication frame comprises the one or more sensing time slots, a number of receiving communication time slots, and a number of transmitting communication time slots, and wherein the one or more sensing time slots are interspersed among the number of receiving communication time slots and the number of transmitting communication time slots.

8. The radar system of any of claims 1 to 6, wherein the communication frame comprises the one or more sensing time slots, a number of receiving communication time slots, and a number of transmitting communication time slots, wherein the one or more sensing time slots are interspersed among the number of receiving communication time slots and the number of transmitting communication time slots such that fast moving objects in the environment can be detected.

9. The radar system of any of claims 1 to 6, wherein the communication frame comprises a radar frame having the one or more sensing time slots, a number of receiving radar time slots, and a number of transmitting radar time slots, and wherein the one or more sensing time slots are interspersed among the number of receiving radar time slots and the number of transmitting radar time slots.

10. A method, comprising:
receiving, by a radar system and within a communication frame, radar metadata including information indicative of one or more sensing time slots within the communication frame;
during the one or more sensing time slots, causing at least one receiver of the radar system to obtain a set of radar reflections off of at least one object in an environment; and
determining, based on the set of received radar reflections and the radar metadata, at least one of a distance between the at least one object and the radar system, a velocity of the at least one object, and an angle of arrival for the at least one object.

11. The method of claim 10, wherein the radar system is a first radar system, wherein the set of radar reflections are radar signals transmitted by a second radar system and reflected off of the at least one object in the environment.

12. The method of any of claims 10 to 11, wherein the set of radar reflections are a first set of radar reflections, the method further comprising:
generating, based on the radar metadata, at least one radar signal;
causing at least one transmitter of the first radar system to transmit the at least one radar signal;
causing the at least one receiver to obtain a second set of radar reflections off of the at least one object in the environment; and
determining, based on the second set of received radar reflections, the at least one of the distance between the at least one object and the radar system, the velocity of the at least one object, and the angle of arrival for the at least one object.

13. The method of any of claim 10 to 12, wherein:
the one or more sensing time slots include a first time slot and a second time slot;
the method further comprises determining a signal strength of radar reflections received during the first time slot;
for the second time slot and in response to the signal strength not satisfying a threshold signal strength, causing the at least one radar signal to have at least one same characteristic indicated by the radar metadata; and
for the second time slot and in response to the signal strength satisfying the threshold signal strength, causing the at least one radar signal to have at least one characteristic different from a characteristic indicated by the radar metadata.

14. The method of any of claims 11 to 13, if dependent on claim 11, wherein the at least one characteristic different from the characteristic indicated by the radar metadata is chosen to reduce interference between the at least one radar signal and the radar signals transmitted by the second radar system.

15. The method of any of claims 11 to 14, if dependent on claim 11, wherein the radar metadata further includes information indicative of at least one of a frequency band of the radar signals transmitted by the second radar system, a waveform sequence of the radar signals transmitted by the second radar system, and beamforming indices of the radar signals transmitted by the second radar system.
